Europäisches Patentamt

European Patent Office

Office européen des brevets

(19)

(11) Veröffentlichungsnummer: **0 401 559**
**A2**

(12) **EUROPÄISCHE PATENTANMELDUNG**

(21) Anmeldenummer: **90109144.7**

(22) Anmeldetag: **15.05.90**

(51) Int. Cl.5: **G06F 7/52**

(30) Priorität: **06.06.89 DE 3918476**

(43) Veröffentlichungstag der Anmeldung:
**12.12.90 Patentblatt 90/50**

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Lohner, Manfred, Dipl.-Ing.**
**Dewetstrasse 2**
**D-8000 München 40(DE)**

(54) **Digitale Multiplikations-/Divisions-Schaltungsanordnung.**

(57) Eine digitale Multiplikations-/Divisions-Schaltungsanordnung, bei der eine aus zwei identisch aufgebauten Teilschaltungen (11, 12) gebildete kombinierte Fließkomma-Multiplikations-/Divisionseinheit (1) vorgesehen ist, wobei die Teilschaltungen (11, 12) in der Lage sind, jeweils selbständig eine Multiplikation auszuführen, so daß zwei Multiplikationen gleichzeitig ablaufen können, und wobei die Rechengenauigkeit derart beschaffen ist, daß sie für Divisionsvorgänge geeignet ist. Die Divisionsvorgänge werden nach einem iterativen Divisionsverfahren durchgeführt, das je Iteration zwei Multiplikationsvorgänge enthält. Die Multiplikations-/Divisionseinheit (1) enthält eine Korrekturschaltung zur Korrektur des jeweiligen Divisionsergebnisses, wobei der Korrekturvorgang eine Multiplikation, einen Vergleich und zwei Additionen umfaßt.

## FIG 1

Eingänge

Slice I

Slice II

11

12

1

Ausgänge

EP 0 401 559 A2

## Digitale Multiplikations-/Divisions-Schaltungsanordnung.

Die vorliegende Erfindung betrifft eine digitale Multiplikations-/Divisions-Schaltungsanordnung.

Zur Erhöhung der Rechengeschwindigkeit bei Divisionsvorgängen werden bisher mehrere Divisionswerke parallel eingesetzt oder es wird ein Iterationsverfahren angewendet, daß auf einem ungeteilten Multiplikationswerk abläuft. Die dafür erforderliche Schaltungstechnik bedingt einen verhältnismäßig großen Hardware-Aufwand und damit einhergehend einen großen Flächenbedarf.

Der Erfindung liegt die Aufgabe zugrunde, eine digitale Schaltungsanordnung zu schaffen, mittels derer die Rechengeschwindigkeit bei Divisionsvorgängen unter Vermeidung eines erhöhten Hardware-Aufwandes gesteigert werden kann und die sowohl Divisions- als auch Multiplikationsberechnungen ausführen kann.

Zur Lösung der Aufgabe wird eine Schaltungsanordnung der eingangs genannten Art und gemäß dem Oberbegriff des Patentanspruchs 1 vorgeschlagen, die erfindungsgemäß durch die im kennzeichnenden Teil des Patentanspruchs 1 angegebenen Merkmale gekennzeichnet ist.

Vorteilhafte Weiterbildungen der Erfindung sind durch die in den Unteransprüchen angegebenen Merkmale gekennzeichnet.

Erfindungsgemäß wird eine kombinierte Fließkomma-Multiplikations- und Divisionseinheit mit zwei identischen Teilschaltungen (Slices) zur Verfügung gestellt. Dabei ist jede Teilschaltung in der Lage, eine Multiplikation selbständig auszuführen, so daß zwei Multiplikationen gleichzeitig ablaufen können. Die Genauigkeit ist so, wie sie auch für die Division benötigt wird. Da der verwendete Divisionsalgorithmus die Parallelität ausnutzt, wird die Division entsprechend schneller abgearbeitet. Außerdem arbeitet die Division im sog. Pipeline-Verfah ren, d. h., es werden mehrere Divisionen gleichzeitig bearbeitet. Dadurch wird der Durchsatz weiter erhöht. Die Schaltungsausführung in zwei identischen Teilschaltungen ist entwurfs-und testfreundlich und damit VLSI-gerecht.

Der gesamte Chipflächenbedarf ist mit konventionellen Lösungen für Schaltungen ausschließlich für Multiplikation bzw. Division vergleichbar.

Im folgenden wird die Erfindung anhand mehrerer Figuren im einzelnen anhand eines bevorzugten Ausführungsbeispiels beschrieben.

Fig. 1 zeigt eine schematische Darstellung des Aufbauschemas einer Multiplikations-/Divisionseinheit 1 mit zwei identisch aufgebauten Teilschaltungen (Slices) 11, 12.

Fig. 2 zeigt ein Blockschaltbild, aus dem die Architektur der Teilschaltung 11 bzw. 12 hervorgeht.

Fig. 3 zeigt eine Pipeline-Belegungstabelle für das Beispiel einer Multiplikation zweier Vektoren A und B.

Fig. 4 zeigt eine Pipeline-Belegungstabelle für das Beispiel einer Division zweier Vektoren A und B.

Fig. 5 zeigt einen Fortsetzungsteil der Belegungstabelle gemäß Fig. 4.

Fig. 6 zeigt einen Fortsetzungsteil der Belegungstabelle gemäß Fig. 5.

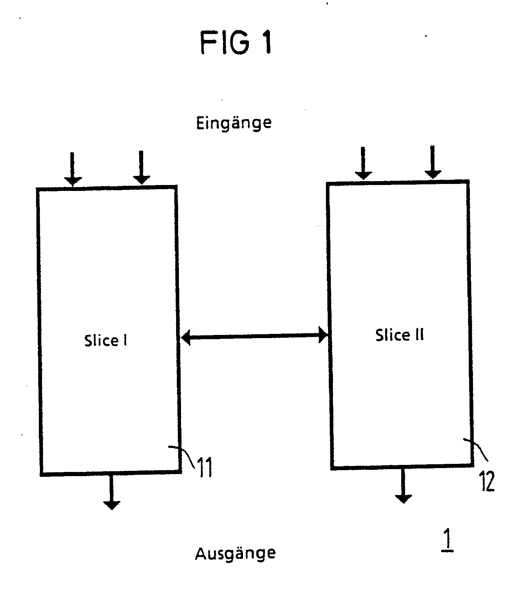

Erfindungsgemäß wird ein iteratives Divisionsverfahren angewandt, das pro Iteration zwei Multiplikationen erfordert. Die Aufteilung in Teilschaltungen 11, 12 (Slices) (vergl. Fig. 1) ermöglicht es, diese zwei Multiplikationen jeweils gleichzeitig auszuführen. Außerdem arbeitet die Division im sog. Pipeline-Verfahren, d. h., es werden mehrere Divisionen gleichzeitig bearbeitet.

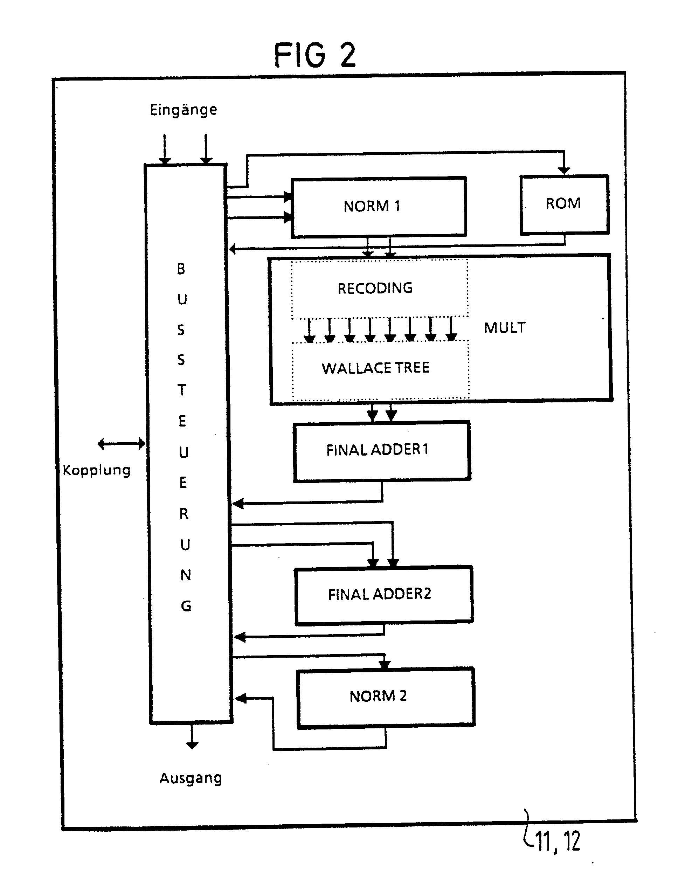

Die Architektur beinhaltet eine Korrekturschaltung zur Korrektur des Divisionsergebnisses, wofür nur ein Iterationszyklus mehr benötigt wird. Dabei werden eine Multiplikation, ein Vergleich und zwei Additionen ausgeführt (vergl. Fig. 2).

Die Verwendung zweier identischer, funktional unabhängig arbeitender Teilschaltungen 11, 12 (Slices) erlaubt, falls keine Operation auszuführen ist, einen Test nach dem sog. Master-Checker-Verfahren. Damit lassen sich einfach Hardware-Fehler feststellen.

Die Funktionalität von Architekturen wird meistens mit Hardware-Simulatoren überprüft. Hier wird ein eigens geschriebenes Programm verwendet, um die Funktionalität zu testen und Testmuster zu erzeugen. Erst anschließend wird die Architektur mit einem Hardware-Simulator simuliert. Dadurch sind wesentlich mehr Zustände simulierbar.

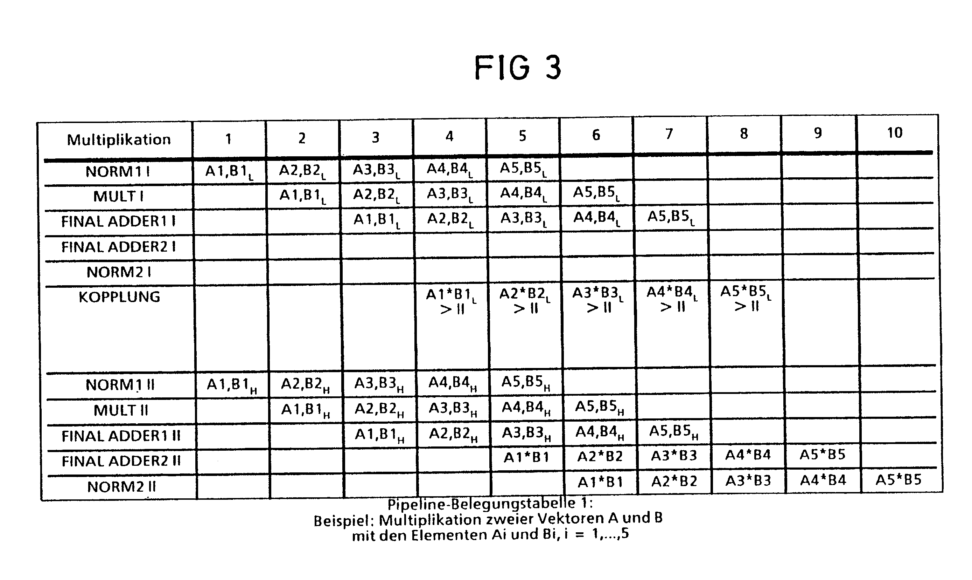

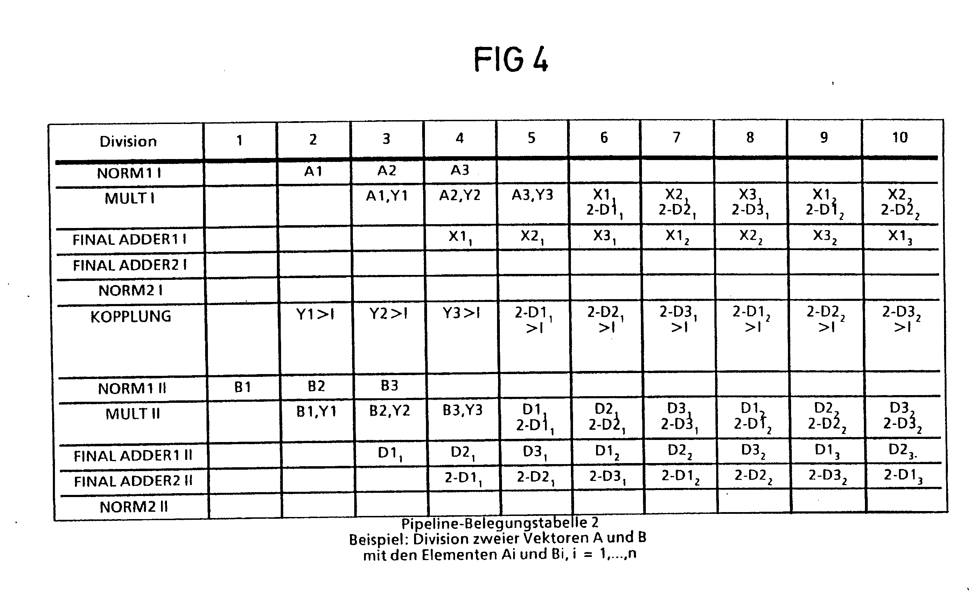

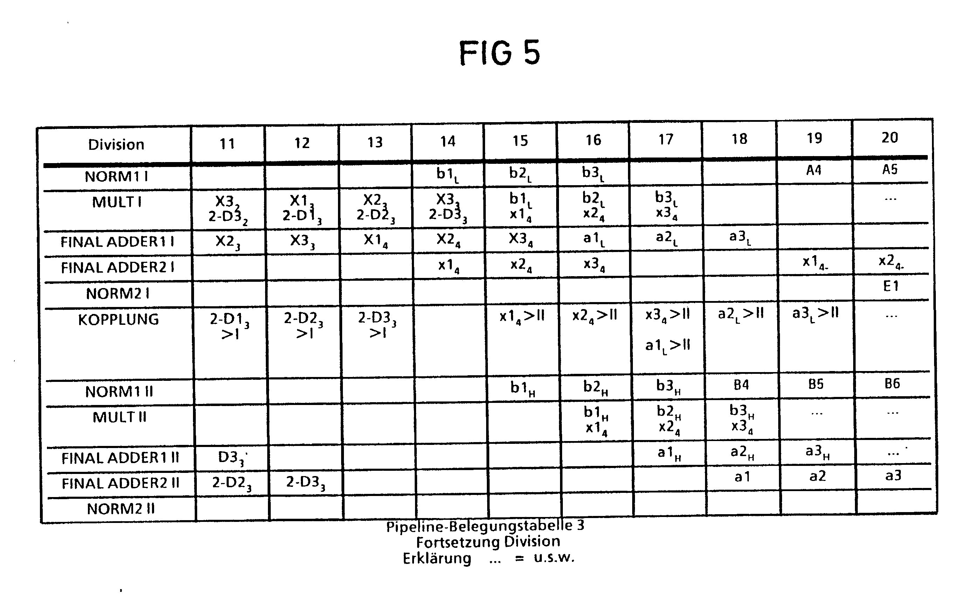

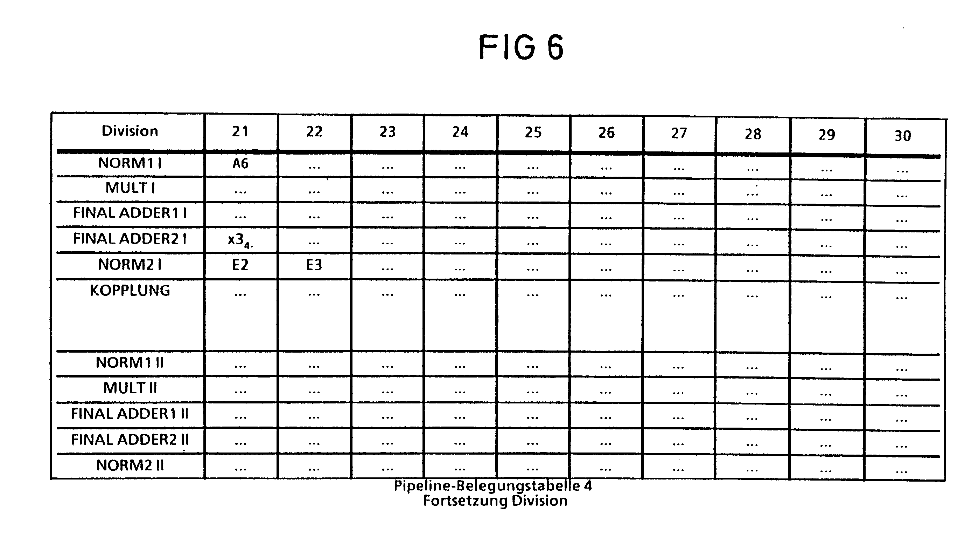

Fig. 2 zeigt, wie bereits erläutert, ein Blockschaltbild einer Teilschaltung 11, 12. Anhand der Pipeline-Belegungstabellen 1 bis 4 (Fig. 3 bis Fig. 6) ist gezeigt, wie mit den zwei Teilschaltungen (Slices) multipliziert und dividiert wird. In der x-Richtung sind die Taktzyklen aufgetragen. In jedem Zyklus können die Einheiten NORM 1, ROM, MULT, FINAL ADDER 1, FINAL ADDER 2, NORM 2 einer Teilschaltung (vergl. Fig. 2) nur eine Operation ausführen. Die vorgegebene Kopplung (vergl. Fig. 1) gestattet, zwei Übertragungen in einem Zyklus auszuführen.

Im Multiplikationsbeispiel (Pipeline-Belegungstabelle 1) werden zwei Vektoren A und B mit fünf Elementen komponentenweise multipliziert. Die Komponenten $Bi$ von B werden in einen höherwertigen Teil $Bi_H$ und in einen niederwertigen Teil $Bi_L$ geteilt. Diese Teile werden jeweils mit $Ai$ multipliziert. Dies geschieht parallel in den beiden Teilschaltungen (Slices). Nachfolgend wird das Produkt $Ai^*Bi_L$, das in Slice I berechnet wurde, zu Slice II übertragen. In der Pipeline-Belegungstabelle ist dies durch das Symbol > II angedeutet. In Slice II werden die Teilprodukte stellenrichtig im FINAL ADDER2 II addiert, und es wird schließlich in der Einheit Norm2 II die Exponenten behandlung und die Normierung vorgenommen.

Die Division arbeitet nach einem Iterationsverfahren. Um Bitkompatibilität mit anderen Divisionsverfahren zu erhalten, ist anschließend noch eine Korrektur nötig.

Im Divisionsbeispiel (Pipeline-$\beta$elegungstabellen 2 bis 4) werden zwei Vektoren A = $(A1,A2,...,Ai,...,An)$ und B = $(B1,B2..., Bi, ...,Bn)$ komponentenweise dividiert. Um für i 1,2...n die Komponente $Ei = Ai/Bi$ des Ergebnisvektors E zu erhalten, werden folgende Schritte ausgeführt:

Aus der Darstellung von Bi wird eine Adresse abgeleitet, der Inhalt Yi des ROM unter dieser Adresse wird mit Ai und Bi multipliziert. Das Ergebnis $Xi_1$ und $Di_1$ wird mit $(2 - Di_1)$ multipliziert, und man erhält $Xi_1$ und $Di_1$.

Die Wiederholung liefert nacheinander folgende Werte:

$Xi_1: = Ai * Yi$
$Xi_2: = Xi_1 * (2 - Di_1)$
$Xi_3: = Xi_2 * (2 - Di_2)$
$Xi_4: = Xi_3 * (2 - Di_3)$
$Di_1: = Bi * Yi$
$Di_2: = Di_1 * (2 - Di_1)$
$Di_3: = Di_2 * (2 - Di_2)$
$Xi_4: = Xi_4 + Konstante 1$

$Xi_4$ ist schon eine gute Näherung für Ai/Bi. Nun muß noch korrigiert werden. Dazu wird ai: = $(Xi_x * Bi)$ berechnet. Dieser Wert wird mit Ai verglichen, und je nach Ergebnis davon wird $Xi_4$ oder $xi_4$ in NORm2 I eingespeist. Am Ausgang erscheint dann das endgültige Ergebnis $Ei: = Ai/Bi$.

Die neuartige Schaltungsanordnung gestattet, die Rechengeschwindigkeit bei Divisionsvorgängen zu erhöhen, wobei der dafür erforderliche Hardware-Aufwand klein ist. Darüber hinaus kann die Schaltungsanordnung außer Divisionsberechnungen auch Multiplikationsberechnungen ausführen.

**Ansprüche**

1. Digitale Multiplikations-/Divisions-Schaltungsanordnung, **dadurch gekennzeichnet,**
- daß eine aus zwei identisch aufgebauten Teilschaltungen (11, 12) gebildete kombinierte Fließkomma-Multiplikations-/Divisionseinheit (1) vorgesehen ist, wobei die Teilschaltungen (11, 12) in der Lage sind, jeweils selbständig eine Multiplikation auszuführen, so daß zwei Multiplikationen gleichzeitig ablaufen können, und wobei die Rechengenauigkeit derart beschaffen ist, daß sie für Divisionsvorgänge geeignet ist,
- daß die Divisionsvorgänge nach einem interativen Divisionsverfahren durchgeführt werden, das je Iteration zwei Multiplikationsvorgänge enthält, und
- daß die Multiplikations-/Divisionseinheit (1) eine Korrekturschaltung zur Korrektur des jeweiligen Divisionsergebnisses enthält, wobei der Korrekturvorgang eine Multiplikation, einen Vergleich und zwei Additionen umfaßt.

2. Schaltungsanordnung nach Anspruch 1, **dadurch gekennzeichnet,** daß aufeinanderfolgende Divisionsvorgänge im sogenannten Pipeline-Verfahren ausgeführt werden.

3. Schaltungsanordnung nach Anspruch 1 oder 2, **dadurch gekennzeichnet,** daß die je Iteration durchzuführenden zwei Multiplikationsvorgänge im sogenannten Pipeline-Verfahren abgewickelt werden.

4. Schaltungsanordnung nach einem der vorhergehenden Ansprüche, **dadurch gekennzeichnet,** daß die Multiplikations-/Divisionseinheit (1) in VLSI-Technologie implementiert ist.

# FIG 1

Eingänge

Slice I

Slice II

11

12

1

Ausgänge

# FIG 2

Eingänge

Kopplung

B U S S T E U E R U N G

NORM 1

ROM

RECODING

MULT

WALLACE TREE

FINAL ADDER1

FINAL ADDER2

NORM 2

Ausgang

11, 12

# FIG 3

| Multiplikation | 1 | 2 | 3 | 4 | 5 | 6 | 7 | 8 | 9 | 10 |
|---|---|---|---|---|---|---|---|---|---|---|
| NORM1 I | $A1,B1_L$ | $A2,B2_L$ | $A3,B3_L$ | $A4,B4_L$ | $A5,B5_L$ | | | | | |
| MULT I | | $A1,B1_L$ | $A2,B2_L$ | $A3,B3_L$ | $A4,B4_L$ | $A5,B5_L$ | | | | |
| FINAL ADDER1 I | | | $A1,B1_L$ | $A2,B2_L$ | $A3,B3_L$ | $A4,B4_L$ | $A5,B5_L$ | | | |
| FINAL ADDER2 I | | | | | | | | | | |
| NORM2 I | | | | | | | | | | |
| KOPPLUNG | | | | $A1*B1_L$ >II | $A2*B2_L$ >II | $A3*B3_L$ >II | $A4*B4_L$ >II | $A5*B5_L$ >II | | |
| NORM1 II | $A1,B1_H$ | $A2,B2_H$ | $A3,B3_H$ | $A4,B4_H$ | $A5,B5_H$ | | | | | |
| MULT II | | $A1,B1_H$ | $A2,B2_H$ | $A3,B3_H$ | $A4,B4_H$ | $A5,B5_H$ | | | | |
| FINAL ADDER1 II | | | $A1,B1_H$ | $A2,B2_H$ | $A3,B3_H$ | $A4,B4_H$ | $A5,B5_H$ | | | |
| FINAL ADDER2 II | | | | | $A1*B1$ | $A2*B2$ | $A3*B3$ | $A4*B4$ | $A5*B5$ | |
| NORM2 II | | | | | | $A1*B1$ | $A2*B2$ | $A3*B3$ | $A4*B4$ | $A5*B5$ |

Pipeline-Belegungstabelle 1:
Beispiel: Multiplikation zweier Vektoren A und B
mit den Elementen Ai und Bi, i = 1,...,5

EP 0 401 559 A2

# FIG 4

| Division | 1 | 2 | 3 | 4 | 5 | 6 | 7 | 8 | 9 | 10 |
|---|---|---|---|---|---|---|---|---|---|---|
| NORM1 I | | A1 | A2 | A3 | | | | | | |
| MULT I | | | A1,Y1 | A2,Y2 | A3,Y3 | $X1,$ $2\text{-}D1_1$ | $X2,$ $2\text{-}D2_1$ | $X3,$ $2\text{-}D3_1$ | $X1,$ $2\text{-}D1_2$ | $X2,$ $2\text{-}D2_2$ |
| FINAL ADDER1 I | | | | $X1_1$ | $X2_1$ | $X3_1$ | $X1_2$ | $X2_2$ | $X3_2$ | $X1_3$ |
| FINAL ADDER2 I | | | | | | | | | | |
| NORM2 I | | | | | | | | | | |
| KOPPLUNG | | Y1>I | Y2>I | Y3>I | $2\text{-}D1_1$ $>I$ | $2\text{-}D2_1$ $>I$ | $2\text{-}D3_1$ $>I$ | $2\text{-}D1_2$ $>I$ | $2\text{-}D2_2$ $>I$ | $2\text{-}D3_2$ $>I$ |
| NORM1 II | B1 | B2 | B3 | | | | | | | |
| MULT II | | B1,Y1 | B2,Y2 | B3,Y3 | $D1,$ $2\text{-}D1_1$ | $D2,$ $2\text{-}D2_1$ | $D3,$ $2\text{-}D3_1$ | $D1,$ $2\text{-}D1_2$ | $D2,$ $2\text{-}D2_2$ | $D3,$ $2\text{-}D3_2$ |
| FINAL ADDER1 II | | | $D1_1$ | $D2_1$ | $D3_1$ | $D1_2$ | $D2_2$ | $D3_2$ | $D1_3$ | $D2_3.$ |
| FINAL ADDER2 II | | | | $2\text{-}D1_1$ | $2\text{-}D2_1$ | $2\text{-}D3_1$ | $2\text{-}D1_2$ | $2\text{-}D2_2$ | $2\text{-}D3_2$ | $2\text{-}D1_3$ |
| NORM2 II | | | | | | | | | | |

Pipeline-Belegungstabelle 2
Beispiel: Division zweier Vektoren A und B
mit den Elementen Ai und Bi, $i = 1,...,n$

EP 0 401 559 A2

# FIG 5

| Division | 11 | 12 | 13 | 14 | 15 | 16 | 17 | 18 | 19 | 20 |
|---|---|---|---|---|---|---|---|---|---|---|
| NORM1 I | | | | $b1_L$ | $b2_L$ | $b3_L$ | | | A4 | A5 |
| MULT I | $X3_2$ $2\text{-}D3_2$ | $X1_3$ $2\text{-}D1_3$ | $X2_3$ $2\text{-}D2_3$ | $X3_3$ $2\text{-}D3_3$ | $b1_L$ $x1_4$ | $b2_L$ $x2_4$ | $b3_L$ $x3_4$ | | | ... |
| FINAL ADDER1 I | $X2_3$ | $X3_3$ | $X1_4$ | $X2_4$ | $X3_4$ | $a1_L$ | $a2_L$ | $a3_L$ | | |
| FINAL ADDER2 I | | | | $x1_4$ | $x2_4$ | $x3_4$ | | | $x1_{4\text{-}}$ | $x2_{4\text{-}}$ |
| NORM2 I | | | | | | | | | | E1 |
| KOPPLUNG | $2\text{-}D1_3$ $>I$ | $2\text{-}D2_3$ $>I$ | $2\text{-}D3_3$ $>I$ | | $x1_4>II$ | $x2_4>II$ $a1_L>II$ | $x3_4>II$ | $a2_L>II$ | $a3_L>II$ | ... |
| NORM1 II | | | | | $b1_H$ | $b2_H$ | $b3_H$ | B4 | B5 | B6 |
| MULT II | | | | | | $b1_H$ $x1_4$ | $b2_H$ $x2_4$ | $b3_H$ $x3_4$ | ... | ... |
| FINAL ADDER1 II | $D3_3$ | | | | | | $a1_H$ | $a2_H$ | $a3_H$ | ... |
| FINAL ADDER2 II | $2\text{-}D2_3$ | $2\text{-}D3_3$ | | | | | | a1 | a2 | a3 |
| NORM2 II | | | | | | | | | | |

Pipeline-Belegungstabelle 3
Fortsetzung Division
Erklärung   ...  = u.s.w.

EP 0 401 559 A2

# FIG 6

| Division | 21 | 22 | 23 | 24 | 25 | 26 | 27 | 28 | 29 | 30 |
|---|---|---|---|---|---|---|---|---|---|---|
| NORM1 I | A6 | ... | ... | ... | ... | ... | ... | ... | ... | ... |
| MULT I | ... | ... | ... | ... | ... | ... | ... | ... | ... | ... |
| FINAL ADDER1 I | ... | ... | ... | ... | ... | ... | ... | ... | ... | ... |
| FINAL ADDER2 I | $x3_4$ | ... | ... | ... | ... | ... | ... | ... | ... | ... |
| NORM2 I | E2 | E3 | ... | ... | ... | ... | ... | ... | ... | ... |
| KOPPLUNG | ... | ... | ... | ... | ... | ... | ... | ... | ... | ... |
| NORM1 II | ... | ... | ... | ... | ... | ... | ... | ... | ... | ... |
| MULT II | ... | ... | ... | ... | ... | ... | ... | ... | ... | ... |
| FINAL ADDER1 II | ... | ... | ... | ... | ... | ... | ... | ... | ... | ... |
| FINAL ADDER2 II | ... | ... | ... | ... | ... | ... | ... | ... | ... | ... |
| NORM2 II | ... | ... | ... | ... | ... | ... | ... | ... | ... | ... |

Pipeline-Belegungstabelle 4
Fortsetzung Division

EP 0 401 559 A2